(19) Europäisches Patentamt
European Patent Office
Office européen des brevets

(11) **EP 3 437 758 A1**

(12) **EUROPÄISCHE PATENTANMELDUNG**

(43) Veröffentlichungstag:
06.02.2019   Patentblatt 2019/06

(51) Int Cl.:
B22D 11/16 *(2006.01)*  B22D 11/20 *(2006.01)*
B21B 38/10 *(2006.01)*  G01B 5/14 *(2006.01)*

(21) Anmeldenummer: 17184150.5

(22) Anmeldetag: 01.08.2017

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(71) Anmelder: Primetals Technologies Austria GmbH
4031 Linz (AT)

(72) Erfinder:
• Lang, Oliver
4407 Dietach (AT)

• Oberschmidleitner, Nicole
4020 Linz (AT)
• Stummer, Christoph
4040 Linz (AT)
• Witzan, Michael
4209 Innertreffling (AT)
• Wurm, August
4061 Pasching (AT)
• Kolmbauer, Franz
1127 Rio de Janeiro (BR)

(74) Vertreter: Metals@Linz
Primetals Technologies Austria GmbH
Intellectual Property Upstream IP UP
Turmstraße 44
4031 Linz (AT)

(54) **MESSVORRICHTUNG ZUR MESSUNG EINES GIESSSPALTS BEI EINER STRANGGIESSANLAGE UND VERWENDUNG DIESER MESSVORRICHTUNG ZUR MESSUNG EINES GIESSSPALTS**

(57)  Die Erfindung betrifft eine Messvorrichtung (1) zur Messung eines Gießspalts (2) bei einer Stranggießanlage (3) sowie eine Verwendung dieser Messvorrichtung (1) zur Messung eines Gießspalts (2).

Die Messvorrichtung (1) zur Messung eines Gießspalts (2) bei einer Stranggießanlage (3) weist zwei um eine gemeinsame Drehachse (4) drehbare Arme (5, 6), d. h. einen ersten Arm (5) und einen zweiten Arm (6), sowie einen Drehwinkelaufnehmer (7) zur Messung eines relativen (Ver-)Drehwinkels (8) der zwei Arme (5, 6) zueinander auf.

Jeder der zwei Arme (5, 6) weist zumindest ein Segment (9, 10) auf, dessen jeweilige Segmentaußenfläche (11, 12) ein Abschnitt einer Oberfläche (13) einer gemeinsamen Kugel (14) ist.

FIG 1

EP 3 437 758 A1

**Beschreibung**

Die Erfindung betrifft eine Messvorrichtung zur Messung eines Gießspalts bei einer Stranggießanlage sowie eine Verwendung dieser Messvorrichtung zur Messung eines Gießspalts.

Eine Stranggießanlage - zum Gießen von Stahlbrammen - umfasst - in einer Durchlaufrichtung des Strangs durch die Stranggießanlage - unter anderem eine Pfanne mit einem Auslassrohr, ein unterhalb der Pfanne angeordnetes Verteilerbecken mit einem Gießrohr und einen im Verteilerbecken angeordneten Stopfen sowie eine unterhalb des Verteilerbeckens angeordnete und ein unteres Ende des Gießrohres aufnehmende sowie gekühlte Breitseitenplatten und gekühlte Schmalseitenplatten aufweisende Kokille.

In der Pfanne befindet sich flüssiger Stahl, der über das Auslassrohr in das Verteilerbecken eingeleitet wird. Aus dem Verteilerbecken wiederum wird der flüssige Stahl über das Gießrohr in die Kokille eingeleitet, wobei ein Massenstrom des in die Kokille fließenden Stahls mithilfe des Stopfens gesteuert wird.

In der Kokille kühlt (primär) der Stahl - an seinen Kontaktflächen mit den (gekühlten) Breitseitenplatten und den (gekühlten) Schmalseitenplatten der Kokille ab und erstarrt hierbei, sodass der Stahl in Form eines Strangs mit einem rechteckigen Querschnitt aus der Kokille austritt. Beim Austreten hat der Strang eine erstarrte Schale von - in der Regel - einigen Zentimetern Dicke, während ein Großteil seines Querschnitts noch flüssig ist.

Unterhalb der Kokille wird der Strang mittels eines Strangführungssystems durch einen unterhalb bzw. nachfolgend der Kokille angeordneten sogenannten Gießbogen - von einer Vertikalen in eine Horizontale - und dann ausgangs des Gießbogens horizontal weiter - geführt bzw. durch Strangführungssystemstützelemente, d. h. Rollen des Strangführungssystems, gestützt und geführt bzw. abtransportiert.

Die Rollen des Strangführungssystems, welche in der Regel in Segmenten (Rollengangsegmente) oder unmittelbar im Gießbogen verbaut sind, kommen - meist paarweise und so einen Gießspalt bzw. Rollenspalt bildend - an einander gegenüberliegenden Seiten des Strangs (anschaulich gesehen an einer Oberseite und an einer Unterseite des Strangs) - diesen stützend und führend - zur Anlage, um darüber hinaus auch ein Ausmaß eines Ausbauchens des Strangs, welches Ausbauchen wegen eines auf eine Strangschale wirkenden ferrostatischen Druckes erfolgt, zu verringern.

Vereinfacht und anschaulich ausgedrückt, diejenigen zwei Rollen des Strangführungssystems, d. h. die eine Rolle des Strangführungssystems, welche an der Oberseite des Strangs zur Anlage kommt, bzw. die andere (korrespondierende) Rolle des Strangführungssystems, welche an der Unterseite des Strangs zur Anlage kommt, welche dabei einen geringsten Abstand ("Normalabstand") zueinander haben und so "unmittelbar" ("normal") einander (am Strang) gegenüberliegen, bilden den bzw. einen örtlichen Gießspalt bzw. Rollenspalt aus.

Gleichzeitig wird der Strang durch Luft-/Wasserbesprühung (sekundär) gekühlt.

Nachfolgend dem Gießbogen befindet sich bei der Stranggießanlage ein Folgeaggregat, wie z. B. eine Brennschneidmaschine, mittels welcher der Strang - in Form von Brammen - zugeschnitten bzw. zerteilt wird.

Der Strang kann aber auch von einem (anderen) Folgeaggregat, beispielsweise einem Walzgerüst einer Gieß-Walz-Verbundanlage, direkt weiterverarbeitet werden, ohne vorher in Stücke zerteilt zu werden.

Die Strangführungsrollen des Strangführungssystems, mittels welcher der Strang - gestützt - abtransportiert wird und die höchsten Beanspruchungen ausgesetzt sind, gehören wegen ihres u. a. formgebenden/-haltenden Einflusses auf den Strang und dessen Strangoberfläche - und so auf die Qualität des Strang bzw. der Bramme - zu zentralen Bauteilen einer Stranggießanlage.

Insbesondere eine (möglichst genaue) Überwachung des Gieß- bzw. Rollenspalts, d. h. die Überwachung des Abstandes der zwei "paarweise zusammengehörenden", an den einander gegenüberliegenden Seiten des Strangs bzw. an der Oberseite und an der Unterseite des Strangs zu Anlage kommenden (und so den Gießspalt bildenden), den Strang führenden Stützelemente/Rollen des Strangführungssystems, im Speziellen eine Messung und/oder Einstellung eines (wertemäßig) vorgebbaren Gieß- bzw. Rollenspalts, ist für die Qualität der Bramme von herausragender Bedeutung.

Aufgrund der ungünstigen Umgebungsbedingungen am (jeweiligen zu überwachenden örtlichen) Gießspalt, wie dortige hohe Temperaturen und/oder eine beschränkte Zugänglichkeit zu den (den jeweiligen Gieß- bzw. Rollenspalt bildenden) Rollen, insbesondere Rollen im "Inneren" eines Rollengangsegments, u. ä., sowie einem Erfordernis - aufgrund einer gegebenenfalls gegebenen individuellen Einstellbarkeit jeder einzelnen Rolle (insbesondere im "Inneren" eines Rollengangsegments), - jeden (örtlichen) Gieß- bzw. Rollenspalt separat überwachen zu können, ist diese Überwachungsaufgabe, insbesondere die Gieß- bzw. Rollenspaltmessung, von besonderer Komplexität.

Eine Aufgabe der Erfindung ist es, eine Messvorrichtung zur Messung eines Gieß- bzw. Rollenspalts bei einer Stranggießanlage anzugeben, welche kostengünstig ist und mittels welcher die Gießspaltmessung effizient und mit hoher Genauigkeit durchgeführt werden kann.

Diese Aufgabe wird gelöst durch eine Messvorrichtung zur Messung eines Gieß- bzw. Rollenspalts (im Folgenden meist nur Gieß- oder Rollenspalt) bei einer Stranggießanlage sowie durch eine Verwendung dieser Messvorrichtung für eine Messung eines Gieß- bzw. Rollenspalts mit den Merkmalen des jeweiligen unabhängigen Anspruchs.

Vorteilhafte Weiterbildungen der Erfindung sind Gegenstand abhängiger Ansprüche sowie der nachfolgenden Beschreibung. Außerdem können sich die nachfolgend beschriebenen Merkmale sowohl auf die erfindungsgemäße Messvorrichtung als auf die erfindungsgemäße Verwendung der Messvorrichtung beziehen.

Die Messvorrichtung zur Messung eines Gießspalts bei einer Stranggießanlage weist zwei um eine gemeinsame Drehachse drehbare Arme, d. h. einen ersten Arm und einen zweiten Arm, sowie einen Drehwinkelaufnehmer zur Messung eines relativen (Ver-)Drehwinkels der zwei Arme zueinander auf.

Dabei kann unter einem solchen Drehwinkelaufnehmer jede Art von (Mess-)Vorrichtung verstanden werden, welche in der Lage ist, den Winkel, d. h. absolut und/oder dessen Veränderung (bei (Ver-)Drehung eines der zwei Arme relativ zu den anderen der zwei Arme), zwischen dem ersten und dem zweiten Arm zu bestimmen.

Beispielsweise kann ein solcher Drehwinkelaufnehmer ein analoger Drehwinkelaufnehmer bzw. Dreh-/Schwenkwinkelsensor, insbesondere ein analoger induktiver Drehwinkelaufnehmer bzw. Dreh-/Schwenkwinkelsensor, sein, welcher sich insbesondere durch seine kompakte Bauweise, seine hohe (Mess-)Genauigkeit und sein ausgezeichnet "Preis-Leistungs-Verhältnis" auszeichnet.

Zum Beispiel kann ein solcher analoger induktiver Drehwinkelaufnehmer der induktive Dreh-/Schwenkwinkelsensor RIPS Serie P505 der Firma ALTHEN GmbH Meß- und Sensortechnik sein. Der Dreh-/Schwenkwinkelsensor RIPS Serie P505 selbst enthält die gesamte Elektronik, einschließlich notwendiger EMV-Komponenten. Der Drehwinkelgeber ist in ein Metallgehäuse, dicht nach IP67, eingebaut. Flansch und Servo-Mount bestehen aus Aluminium.

Aus dem - unter Verwendung dieses Drehwinkelaufnehmers - gemessenen (Ver-)Drehwinkel der zwei Arme zueinander kann dann weiter in ein lineares Abstandsmaß, d. h. vereinfacht ein Abstandswert, insbesondere der zu messende Gießspalt, bestimmt werden.

Jeder der zwei Arme weist zumindest ein Segment, vereinfacht ausgedrückt einen (räumlichen) Abschnitt, auf, dessen jeweilige Segmentaußenfläche ein Abschnitt einer Oberfläche einer gemeinsamen Kugel ist.

D. h., vereinfacht ausgedrückt, die Segmentaußenflächen (der (Arm-)Segmente (auch als Kugelschalen bezeichnet) weisen eine übereinstimmende, d. h. die gleiche, dreidimensionale (Raum-)Krümmung bzw. Sphäre einer (bestimmten bzw. gemeinsamen) Kugel auf.

Dabei kann als (Segment-)Außenfläche eines Armsegments diejenige Fläche des jeweiligen Armsegments verstanden werden, welche dem jeweils anderen Armsegment abgewandt ist.

Insbesondere die Armsegmente, aber auch die anderen Bauteile der Messvorrichtung können aus einem Stahlwerkstoff sein, sind sie dadurch höchst verschleißfest. Auch können die Segmentaußenflächen weiter behandelt sein, beispielsweise geschliffen und/oder gehärtet, um so noch verschleißfester und/oder glatter zu sein.

Bei der Verwendung der Messvorrichtung zur Messung eines Gießspalts bei einer Stranggießanlage kann dann die Vorrichtung derart in einen durch zwei zusammengehörige Stützelemente/Rollen gebildeten Gieß-/Rollenspalt eingebracht werden, dass jeweils eine der zwei Segmentaußenflächen eine der zwei zusammengehörigen Stützelemente/Rollen kontaktiert. Dabei kann dann der relative (Ver-)Drehwinkel der zwei Arme zueinander unter Verwendung des Drehwinkelaufnehmers gemessen werden. Der relative (Ver-)Drehwinkel kann dann in ein lineares Abstandsmaß, d. h. der Höhe des Gieß-/Rollenspalts, umgerechnet werden.

Die Messung des Gieß-/Rollenspalts zwischen den (zusammengehörenden, den Gießspalt bildenden) Rollen kann sowohl in einer Werkstätte als auch in der Stranggießanlage erfolgen. Der Messwert für den Gieß-/Rollenspalt kann dann als Kalibrierwert für ein positionsgeregeltes Rollengangsegment verwendet werden.

Der Erfindung liegt die Überlegung und Erkenntnis zugrunde, dass bei jeder Messung systematische (Mess-)Fehler auftreten können, beispielsweise durch falsch justierte, wie verkippt oder verdreht(in den Gießspalt) eingeführte bzw. eingesetzte, Messvorrichtungen (systematischer geometrischer Messfehler).

Durch die erfindungsgemäß vorgesehene Ausbildung der Segmentaußenflächen als Oberflächenabschnitt einer gemeinsamen Kugel ("Kugelsegment/Kugelschale"), wird es möglich, einen solchen systematischen bzw. systematischen geometrischen Messfehler, beispielsweise bei falscher, wie verkippter, Justierung (der Messvorrichtung im Gießspalt), zu eliminieren oder weitestgehend zu eliminieren bzw. zu minimieren.

Vereinfacht ausgedrückt, da die den Gießspalt bildenden zusammengehörenden Rollen eines Strangführungssystems einer Stranggießanlage "kontaktierenden" Oberflächen der erfindungsgemäßen Armsegmente der Messvorrichtung bzw. Oberflächen der erfindungsgemäßen "Kugelsegmente/Kugelschalen" Kugeloberflächen einer gemeinsamen Kugel sind, haben Verkippungen/Verdrehungen der "Kugelsegmente/Kugelschalen" (in der Messposition) keinen verfälschenden Einfluss (hier ist der Kugeldurchmesser gleich dem Gießspalt) oder nur geringen verfälschenden Einfluss (hier weicht der Kugeldurchmesser vom Gießspalt ab) - auf das Messergebnis.

Kurz, die erfindungsgemäße Messvorrichtung ist - weitestgehend - "immun" gegen systematische geometrische Messfehler.

Ist die erfindungsgemäße Messvorrichtung - weitestgehend - "immun" gegen systematische geometrische Messfehler, wie sie bei einer verkippten Lage der Messvorrichtung im Gießspalt entstehen können, so ermöglicht dadurch die erfindungsgemäße Messvorrichtung, dass insbesondere ein (geometrisch und/oder den Umgebungsbedingungen geschuldet) beschränkt zugänglicher Gießspalt bzw. Rollenspalt, beispielsweise im "Inneren" eines Rollengangsegments, effizient und mit hoher Genauigkeit vermessen werden kann, muss die erfindungsgemäße Messvorrichtung - aufgrund ihrer "Fehlerimmunität" - eben nicht komplett exakt in den Gießspalt eingeführt bzw. positioniert werden.

Dadurch kann mit der erfindungsgemäßen Messvorrichtung eine Gießspaltmessung (insbesondere unter "erschwerten Bedingungen") effizient und mit hoher Genauigkeit durchgeführt werden, wodurch dann qualitativ hochwertige Brammen bei einer Stranggießanlage hergestellt werden können.

Auch die Sicherheit - bei der händischen Vermessung eines insbesondere schwer zugänglichen Gießspalts durch einen Bediener - kann durch die erfindungsgemäße Messvorrichtung erhöht werden, vereinfacht die "Fehlerimmunität" der erfindungsgemäßen Messvorrichtung das händische Einführen der Messvorrichtung in den zu vermessenden Gießspalt.

Des Weiteren ist eine erfindungsgemäße Messvorrichtung - insbesondere aufgrund ihrer leicht fertigbaren (Einzel-)Bauteile, wobei hier auch Standardbauteile verwendet werden können, - kostengünstig. Darüber hinaus baut sie sehr kompakt.

Kurz, die erfindungsgemäße Messvorrichtung stellt ein neues Messgerät zur Verfügung, mit welchem es möglich ist, einen, insbesondere schwer zugänglichen bzw. insbesondere unter "erschwerten Bedingungen" zugänglichen, Gieß-/Rollenspalt, insbesondere bei einem Rollengangsegment mit einzeln verstellbaren Rollen, effizient und mit hoher Genauigkeit zu vermessen.

Bevorzugt ist bei der Messvorrichtung vorgesehen, dass der Durchmesser der gemeinsamen Kugel aus einem Bereich von 150 mm bis 350 mm, insbesondere aus einem Bereich von 200 mm bis 300 mm, besonders bevorzugt aus einem Bereich von 220 mm bis 250 mm, gewählt ist.

Anders ausgedrückt, der die Sphäre (bei den Armsegmenten bzw. "Kugelsegmenten/Kugelschalen) definierende Kugelradius kann aus einem Bereich von 75 mm bis 175 mm, insbesondere aus einem Bereich von 100 mm bis 150 mm, besondere bevorzugt aus einem Bereich von 110 mm bis 125 mm, gewählt sein.

Damit lassen sich durch die Messvorrichtung insbesondere typische Rollengangsegmente mit einem (Soll-)Gieß-/Rollenspalt zwischen 200 mm und 300 mm vermessen.

Anders bzw. verallgemeinert ausgedrückt, der Durchmesser bei der Messvorrichtung kann an einen Sollgieß-/Rollenspalt angepasst werden. Insbesondere gleich gewählt, sein. So kann beispielsweise - für einen typischen Rollenspalt von 230 mm - der Durchmesser der Sphäre bei der Messvorrichtung ebenfalls 230 mm sein.

Ferner kann auch vorgesehen sein, dass - bei der Messvorrichtung bzw. bei dortigen Segmenten - die jeweilige Segmentaußenfläche durch folgende Kugelkoordinaten (r (Kugelradius), $\varphi$ (Azimutwinkel), $\theta$ (Polarwinkel)), mit $[0° \leq \varphi \leq$ ca. 35°] oder $[0° \leq \varphi \leq$ ca. 30°] oder $[0° \leq \varphi \leq$ ca. 25°] oder $[0° \leq \varphi \leq$ ca. 20°], mit $[0° \leq \theta \leq$ ca. 90°] oder $[0° \leq \theta \leq$ ca. 80°] oder $[0° \leq \theta \leq$ ca. 70°] oder $[0° \leq \theta \leq$ ca. 60°] beschreibbar ist.

Derartig konzipierte bzw. bemessene Segmentaußenflächen stellen einen guten Kompromiss zwischen einem großem Kontaktierbereich (von Segmentaußenfläche und Rollenoberfläche) und somit einen großen "Verkippungstoleranzbereich" bzw. einer Vielzahl von Messpositionen und einer kleinen Baugröße der Messvorrichtung dar.

Weiterhin kann bei der Messvorrichtung vorgesehen sein, dass die zwei um eine gemeinsame Drehachse drehbaren Arme unter Verwendung einer Feder, insbesondere einer Spiralfeder, gegeneinander verspannt sind. Eine solche Feder bzw. Spiralfeder kann derart "funktionell" zwischen den Armen angebracht sein, dass deren Verspannung ein "Auseinanderdrücken" der Arme, d. h. eine Vergrößerung eines Öffnungswinkels zwischen den Armen, bewirkt.

Auch kann bei der Messvorrichtung vorgesehen sein, dass die zwei um eine gemeinsame Drehachse drehbaren Arme unter Verwendung eines Wälzlagers, insbesondere eines Kugellagers, gegeneinander drehbar gelagert sind. Werden hier Standardlager verwendet, kann sich dies kostengünstig für die Messvorrichtung auswirken.

Weiterbildend kann auch vorgesehen sein, dass die zwei um eine gemeinsame Drehachse drehbaren Arme einen, insbesondere unter Verwendung mindestens eines, insbesondere mechanischen, Anschlags begrenzbaren, maximalen mechanischen (Ver- )Drehwinkelbereich von ca. +/- 12,5° oder von ca. +/- 10° oder von ca. +/- 7,5° oder von ca. +/- 5° aufweisen.

Ferner kann weiter auch vorgesehen sein, dass die zwei um eine gemeinsame Drehachse drehbaren Arme einen, insbesondere unter Verwendung des Drehwinkelaufnehmers messbaren, maximalen messtechnischen (Ver-)Drehwinkelbereich von ca. +/- 12,5° oder von ca. +/- 10° oder von ca. +/- 7,5° oder von ca. +/-5° oder von ca. +/-5° aufweisen.

Anders bzw. allgemeiner ausgedrückt, der maximale mechanische (Ver-)Drehwinkelbereich und/oder der maximale messtechnische (Ver-)Drehwinkelbereich (Messbereich des Drehwinkelaufnehmers) kann/können, wie gegebenenfalls der Kugeldurchmesser auch, an den Sollwert des zu vermessenden Gieß-/Rollenspalts angepasst sein.

So können sich - beispielsweise in einer für einen 230 mm dicken Gießspalt konzipierten Messvorrichtung (d. h., der Kugeldurchmesser bei den Segmentaußenflächen der Messvorrichtung entspricht dem Sollgieß-/Rollenspalt, hier dann 230 mm) - die Arme der Messvorrichtung 20 mm über den Sollwert des zu vermessenden Gießspalts hinaus öffnen bzw. können sich bis zu 55mm unterhalb des Sollwertes schließen (bis gegebenenfalls ein mechanischer Endanschlag wirksam wird). Die Messvorrichtung hätte so einen maximalen mechanischen Spielraum von 185 mm bis 250 mm.

Auch können - nach obig beispielhaft konzipierter Messvorrichtung (Kugeldurchmesser und Sollgieß-/-rollenspalt 230 mm) - eine Winkelstellung der Arme in einem Öffnungsbereich von 220 mm - 240 mm messtechnisch erfasst werden, was bei der gewählten Geometrie beim Drehwinkelaufnehmer einem Messbereich von $\pm 7,5°$ entspricht.

Weiter kann dann auch vorgesehen sein, dass der maximale mechanische (Ver-)Drehwinkelbereich größer ist als der maximale messtechnische (Ver-)Drehwinkelbereich.

D. h. anschaulich und beispielhaft erklärt, die Arme der Messvorrichtung können sich über einen Sollwert des zu vermessenden Gießspalts hinaus öffnen bzw. können sich unterhalb des Sollwertes schließen (bis gegebenenfalls ein mechanischer Endanschlag wirksam wird), ohne, dass dies jeweils vom Drehwinkelaufnehmer erfasst würde.

Dieser über den messtechnischen hinausgehenden mechanischen Spielraum kann dazu dienen, die in einem Segment eines Kaltstrangs montierte Messvorrichtung ohne Beschädigung an sogenannte Treiberrollen eines Rollganges vorbeizufahren.

So besitzt - beispielshaft ausgeführt nach obigem Beispiel (Sollgießspalt 230 mm) - der Kaltstrang selbst typischerweise eine mechanische Bauhöhe von 200 mm (aus Gewichts- und Kostengründen wird der Kaltstrang so leicht als nötig gebaut und besitzt daher eine geringere Bauhöhe als der Rollenspalt selber) und wird von den Treiberrollen in dem Rollgang weiterbewegt.

Wenn nun jenes Segment des Kaltstranges, in dem die Messvorrichtung montiert ist, direkt unter einer solchen Treiberrolle hindurchläuft, so muss sichergestellt sein, dass die Messvorrichtung nicht von den Treiberrollen zerquetscht wird, sondern innerhalb des Kaltstranges versenkt werden kann. Da im Laufe der Zeit der Kaltstrang selbst von den mit sehr gro-ßen Kräften angreifenden Treiberrollen zusätzlich etwas flachgewalzt wird, ist eine entsprechende Toleranz unterhalb der Kaltstranghöhe von 200 mm vonnöten, sodass die genannte minimale mechanische Öffnung von 185 mm hier ausreichend erscheint.

Auch kann vorgesehen sein, dass der Drehwinkelaufnehmer ein analoger Drehwinkelaufnehmer, insbesondere ein induktiver analoger Drehwinkelaufnehmer, ist.

Derartige analoge Drehwinkelaufnehmer haben gegenüber digitalen Winkelsensoren den Vorteil, dass sie bei vergleichbarer Winkelauflösung eine wesentlich kleinere Bauform besitzen.

So kann ein solcher analoger Drehwinkelaufnehmer vorteilhafter Weise in einem "Inneren" der gemeinsamen Drehachse der Arme der Messvorrichtung platziert werden, was ihn vor äußeren Umwelteinflüssen, wie mechanische Stöße, Feuchtigkeit, oder Staub schützt.

Zudem können derartige analoge Drehwinkelaufnehmer mit guter Linearität und Temperaturbeständigkeit bei vergleichsweise geringen Herstellungskosten produziert werden.

Eine notwendige A/D-Wandlung eines Analogsignals eines solchen analogen Drehwinkelaufnehmers kann ebenfalls mit handelsüblichen und dementsprechend kostengünstigen Industriestandard-Elektronikkomponenten erfolgen und stellt keinen wirklichen Nachteil gegenüber digitalen Winkelgebern dar.

Beispielsweise kann das Analogsignal eines solchen analogen Drehwinkelaufnehmers (vgl. obiges Beispiel für eine Messvorrichtung) bei einem maximalen Mess- bzw. Winkelbereich von $\pm 7,5°$ - entsprechend einer mechanischen Bewegung der Messvorrichtung von $\pm 10$ mm - mit 13Bit gewandelt werden, was einer Winkelauflösung von knapp 7 Bogensekunden bzw. einer räumlichen Auflösung des zu messenden Gießspalts von etwa 25 $\mu$m entspricht, was wiederum der Hälfte einer - beispielhaft - geforderten Messgenauigkeit in Bezug auf den Gießspalt von 50 $\mu$m entspricht.

So können auch mittels einer Kalibrierung der Messvorrichtung zuverlässig auch eine Drift des analogen Signalausgangs (z. B. in Abhängigkeit der Temperatur oder in Form eines Langzeitdrifts aufgrund langer Lagerzeit) kompensiert werden.

Weiterbildend kann bei der Messvorrichtung auch vorgesehen sein, dass jeder der zwei Arme zumindest ein erstes weiteres Verlängerungssegment, insbesondere ein erstes weiteres und ein zweites weiteres Verlängerungssegment, aufweist, welches erste und/oder zweite Verlängerungssegment mit dem jeweiligen Segment, insbesondere einstückig, verbunden ist.

Derartige Verlängerungssegmente bei der Messvorrichtung können die Positionierung der Messvorrichtung (im Gieß-/Rollenspalt) erleichtern.

Ferner kann weiter dann auch vorgesehen sein, dass das erste und/oder das zweite Verlängerungssegment eine jeweilige Verlängerungssegmentaußenfläche aufweist, die ein Abschnitt einer Oberfläche eines geraden Kreiszylinders ist, insbesondere eines geraden Kreiszylinders, welcher den Durchmesser der gemeinsamen Kugel besitzt.

Auch kann dieses die Positionierung der Messvorrichtung (im Gieß-/Rollenspalt) erleichtern.

Auch kann vorgesehen sein, dass jeder Arm einen Grundträger aufweist, an welchem das jeweilige Segment und/oder das erste weitere Verlängerungssegment und/oder das zweite weitere Verlängerungssegment lösbar, insbesondere unter Verwendung einer Verschraubung, angeordnet ist/sind.

Weiterbildend kann bei der Messvorrichtung auch vorgesehen sein, dass der Drehwinkelaufnehmer im Bereich der gemeinsamen Drehachse der zwei um die gemeinsame Drehachse drehbaren Arme, insbesondere zumindest teilweise in einer Längsbohrung in einer Welle, durch welche die gemeinsame Drehachse verläuft, angeordnet ist.

Vereinfacht und anschaulich ausgedrückt, der Drehwinkelaufnehmer kann im "Inneren" der gemeinsamen Drehachse der Arme der Messvorrichtung angeordnet sein. So kann der Drehwinkelaufnehmer geschützt von äußeren Umwelteinflüssen, wie mechanischen Stößen, Feuchtigkeit und/oder Staub, werden; auch kann eine solche Anordnung zu einer kompakten Bauform der Messvorrichtung beitragen.

Zweckmäßiger Weise kann bei der Messvorrichtung auch vorgesehen sein, dass die zwei um die gemeinsame Drehachse drehbaren Arme derart ausgebildet sind, dass, wenn die zwei um die gemeinsame Drehachse drehbaren Arme derart zueinander verdreht sind, dass die zwei Segmentaußenflächen auf der Oberfläche der gemeinsamen Kugel zu liegen kommen ("Ausgangsstellung" mit "Ausgangshöhe"), dann ein Mittelpunkt der gemeinsamen Kugel beabstandet, insbesondere in einem Abstand von ca. 60 mm oder von ca. 55mm oder von ca. 50 mm oder von ca. 45 mm, von der gemeinsamen Drehachse liegt ("Mittelpunktversatz").

Mit einer Wahl dieses "Mittelpunktversatzes" des Kugelmittelpunkts zur gemeinsamen Drehachse bei der Messvorrichtung kann der Einfluss des relativen (Ver-)Drehwinkels auf den Segmentabstand bzw. des Abstandes der Segmentaußenflächen eingestellt werden.

Nach Weiterbildungen können auch vorgesehen sein, die Messvorrichtung in (übergeordneten) Messeinheiten einzubauen.

So kann bevorzugt bei einer solchen Messeinheit vorgesehen sein, dass die Messvorrichtung auf einer Längsschiene - in einer Längsrichtung der Längsschiene verfahrbar, insbesondere motorisiert oder händisch verfahrbar, - angeordnet ist.

Eine Energieversorgung, insbesondere eine Stromversorgung, eines Motors, kann dabei über Versorgungsleitungen oder über Batterien erfolgen.

Eine Datenerfassung von Messdaten der Messvorrichtung und/oder eine Steuerung des Motors (Auswerteeinheit) können direkt an die Schiene montiert werden oder in einer eigenen Auswertebox untergebracht werden.

Ein Human Maschine Interface (HMI) kann zur Steuerung eines Messablaufes und zu einer Messung, Auswertung und Visualisierung dienen.

Daten zwischen dem HMI und der Auswerteeinheit können mit Kabel oder wireless übertragen werden. Als HMI können sowohl PCs, Notebooks, Tablets als auch Smartphones dienen.

Diese Längsschiene kann dann in ein Rollengangsegment bzw. zwischen dessen Rollen geschoben - und dort, mittels geeigneter Sicherungselemente, gegen ein Verschieben in oder gegen die Rollengangsegmentlängsrichtung (Durchlaufrichtung) gesichert werden. Wird dann die Messvorrichtung entlang der Längsschiene bewegt, können die einzelnen Rollenspalten des Rollengangsegments einzeln und nacheinander vermessen werden.

Bei einer anderen solchen Messeinheit kann bevorzugt vorgesehen sein, dass die Messvorrichtung - oder mehrere davon - in einen Kaltstrang, insbesondere in ein Kaltstrangglied, eingebaut oder einem solchen angehängt ist bzw. sind.

Bei einer Messung kann dann der derart ausgebildete Kaltstrang durch die Stranggießanlage gezogen werden.

Für die eine Messvorrichtung bzw. für alle Messvorrichtungen in/an einem solchen Kaltstrang kann es eine Auswerteeinheit, die ebenfalls im Kaltstrang untergebracht werden kann, geben.

Die Übertragung der Daten zwischen der Auswerteeinheit und dem HMI kann auch hier sowohl über Kabel erfolgen (, das an die Auswerteeinheit angesteckt wird, wenn der Kaltstrang in seiner Ruheposition ist), als auch kabellos ("wireless") erfolgen.

Bei einer solchen "wireless"-Übertragung können sowohl die Messdaten als auch die Spannungsübertragung wireless erfolgen.

**Korrekturverfahren**

Ist die Messzange - weitestgehend - "immun" gegen systematische geometrische Messfehler, wodurch die Messvorrichtung nicht komplett exakt in den Gießspalt eingeführt bzw. positioniert werden muss, so kann trotzdem aber auch, insbesondere bei einer verkippt in den Messspalt eingebrachter Messvorrichtung, eine "mathematische Korrektur" des durch die Messvorrichtung gemessenen Gießspalts bzw. des ermittelten Gießspaltwertes vorgenommen werden, welche diese Verkippung bzw. Schiefstellung "mathematisch" berücksichtigt bzw. korrigiert.

Eine solche Verkippung der Messvorrichtung kann beispielsweise dadurch herbeigeführt sein, dass eine die Messvorrichtung tragende und in ein Rollengangsegment eingebrachte Längsschiene durch Rollen des Rollengangsegments, in welchem sie eingebracht ist, in eine gekippte Position (Schiefstellung) gezwungen wird, beispielsweise bei einem gebogenen Rollengangsegment.

Hierfür, d. h., für diese mathematische Korrektur der Verkippung, kann - zusätzlich zum Drehwinkelaufnehmer, der den relativen (Ver-)Drehwinkel der zwei Arme zueinander misst - ein Neigungssensor bei der Messvorrichtung vorgesehen sein, beispielsweise an der Messvorrichtung (beispielsweise dort an einem der beiden Messarme) oder an der Längsschiene montiert, unter Verwendung dessen insbesondere ein absoluter Neigungswinkel der Messvorrichtung bzw. der Längsschiene gegen eine Vertikale bzw. die Lotrichtung, d. h., gegen die Richtung der Erdschwerkraft bzw. in Richtung der Erdbeschleunigung, messbar ist.

Der (Verkippungs-)korrigierte Gießspalt kann dann als Funktion des absoluten Neigungswinkels (des Neigungssensors) und des relativen (Ver-)Drehwinkels des Drehwinkelaufnehmers beschrieben (und so berechnet) werden, wobei hier auch weitere geometrische Konstruktionsmasse, wie eine Länge der Arme und/oder der Kugelradius, die Rollendurchmesser, in die Funktion eingehen können.

Bei der Funktion können auch (geometrische) Näherungen, wie beispielsweise bei den Berührpunkten zwischen den Segmentaußenflächen und den Rollen des zu vermessenden Gießspalts bzw. deren Lage, angenommen bzw. unterstellt werden.

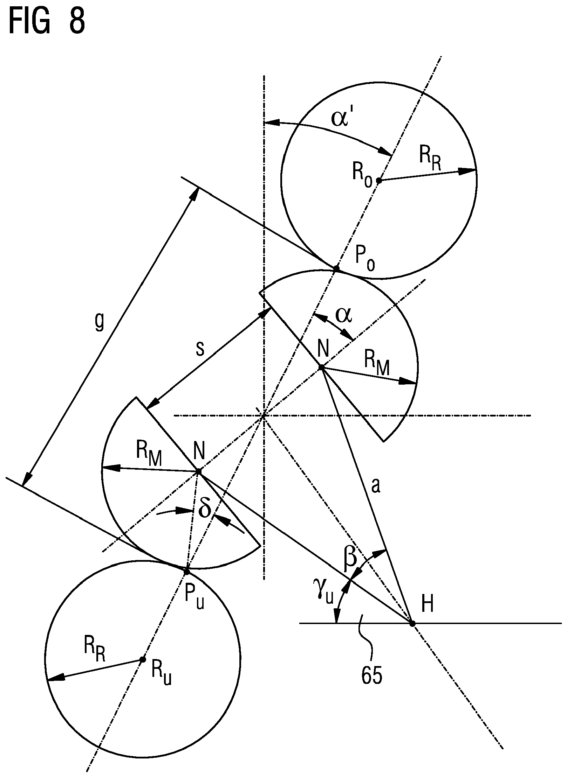

Der (Verkippungs-)korrigierte Gießspalt g kann beispielsweise durch folgende Funktion (Formel 1) beschrieben bzw. berechnet werden (vgl. FIG 8, Skizze mit geometrischen Überlegungen zur Vermessung des Gießspalts unter Verwendung der Messvorrichtung):

$$g = 2R_M \cos\delta + s \cos\alpha \qquad \text{(Formel 1)}$$

Dabei kann der Abstand s über den gemessenen relativen Verdrehwinkels der Messarme wie folgt ermittelt werden:

$$s = 2\alpha \sin\frac{\beta}{2} \qquad \text{(Formel 2)}$$

Aus der bekannten Geometrie der Anlage/Rollengangsegments/Rollen ($\alpha'$) und der Neigung eines Messarms der Messvorrichtung (hier Neigung des unteren Messarms, erhalten aus dem Neigungssensor (angeordnet am unteren Messarm)) kann der Winkel $\alpha$ berechnet werden:

$$\alpha = \gamma_v + \frac{\beta}{2} - \alpha' \qquad \text{(Formel 3)}$$

Alternativ zu einer Berechnung des Winkels $\alpha$ mit Formel 3 dann - vereinfacht (hier entspricht die Neigung RO-RU der oberen und unteren Rolle annähernd der Vertikale) - ein unmittelbar mit einem Neigungssensor ermittelter Neigungswinkel $\alpha$ (der Messvorrichtung gegen die Vertikale) (hier dann unmittelbar Winkel $\alpha$) herangezogen werden.

Damit kann der Hilfswinkel $\delta$ berechnet werden:

$$\delta = arcsin\left(\frac{s}{2R_M}\sin\alpha\right) \qquad \text{(Formel 4)}$$

wobei:

| | |
|---|---|
| $\alpha$ | Winkel zwischen der Messvorrichtung und der Verbindungsachse zwischen den zu messenden Rollen. |
| $\alpha'$ | Winkel der Verbindungsachse RoRu zwischen den zu messenden Rollen und der Vertikalen |
| $\beta$ | gemessener, relativer Verdrehwinkel $\beta$ der Messarme |
| $\gamma$U | Neigung des unteren Messarms (gegen die Horizontale), erhalten aus dem Neigungssensor (angeordnet am unteren Messarm) |
| $\delta$ | Hilfswinkel für die Berechnung |
| H | Drehpunkt der Messarme der Messvorrichtung |
| PO, PU | Berührpunkte zwischen Messkugeln der Messvorrichtung und der oberen und unteren Rolle |
| RM | Radius der Kugel der Messvorrichtung |
| RR | Radius der Rolle die vermessen werden soll (in der Berechnung werden die Radien von oberer und unterer Rolle als gleich angenommen; in der Praxis können diese auch unterschiedlich sein) |
| RO, RU | Mittelpunkte der oberen und unteren Rolle |
| a | Abstand zwischen Messkugelmittelpunkt N und Drehpunkt H der Messkugeln |
| g | (Verkippungs-)korrigierter Gießspalt, tatsächlicher Spalt zwischen oberer und unterer Rolle |

s          Abstand zwischen den beiden Messkugel-Mittelpunkten

ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombination zusammengefasst werden. Insbesondere sind diese Merkmale jeweils einzeln und in beliebiger geeigneter Kombination mit der erfindungsgemäßen Kokille und den erfindungsgemäßen Verfahren kombinierbar. So sind Verfahrensmerkmale, gegenständlich formuliert, auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explicit isoliert betrachtet, aus einem Ausführungsbeispiel entfernt, in ein anderes Ausführungsbeispiel zu dessen Ergänzung eingebracht und mit einer beliebigen der Ansprüche kombiniert werden.

Es zeigen:

FIG 1      eine erste Ansicht einer Messzange zur Gießspaltmessung;

FIG 2      eine zweite Ansicht der Messzange zur Gießspaltmessung nach FIG 1;

FIG 3      eine erste Konstruktionsskizze, welche die Messzange nach FIG 1 in einer ersten Ansicht zeigt;

FIG 4      eine zweite Konstruktionsskizze, welche die Messzange nach FIG 1 in einer zweiten Ansicht zeigt;

FIG 5      ein erstes Messsystem mit einer Längsschiene und einer darauf längs verfahrbaren Messzange nach FIG 1;

FIG 6      das in einem Gießspalt eingeschobene Messsystem nach FIG 5 und

FIG 7      einen Kaltwalzstrang (zweites Messsystem) mit mehreren dort eingebauten Messzangen nach FIG 1 und

FIG 8      Skizze mit geometrischen Überlegungen zur Vermessung des Gießspalts unter Verwendung der Messvorrichtung bzw. Messzange.

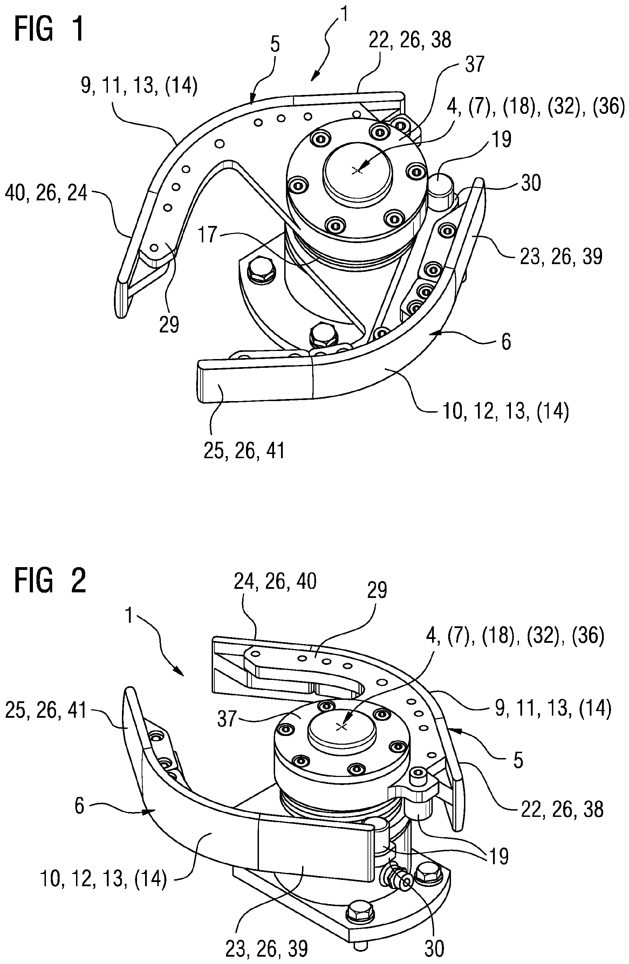

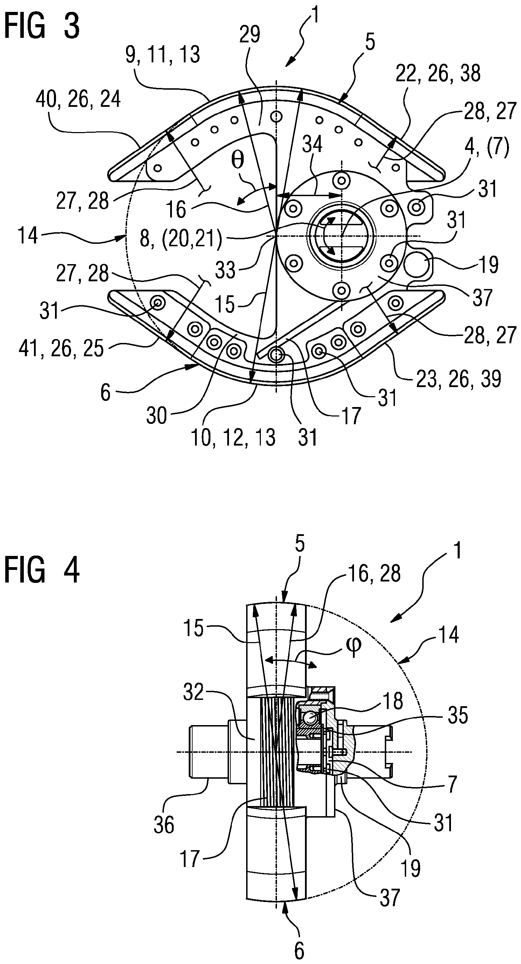

**Messzange 1 (FIG 1 bis FIG 4)**

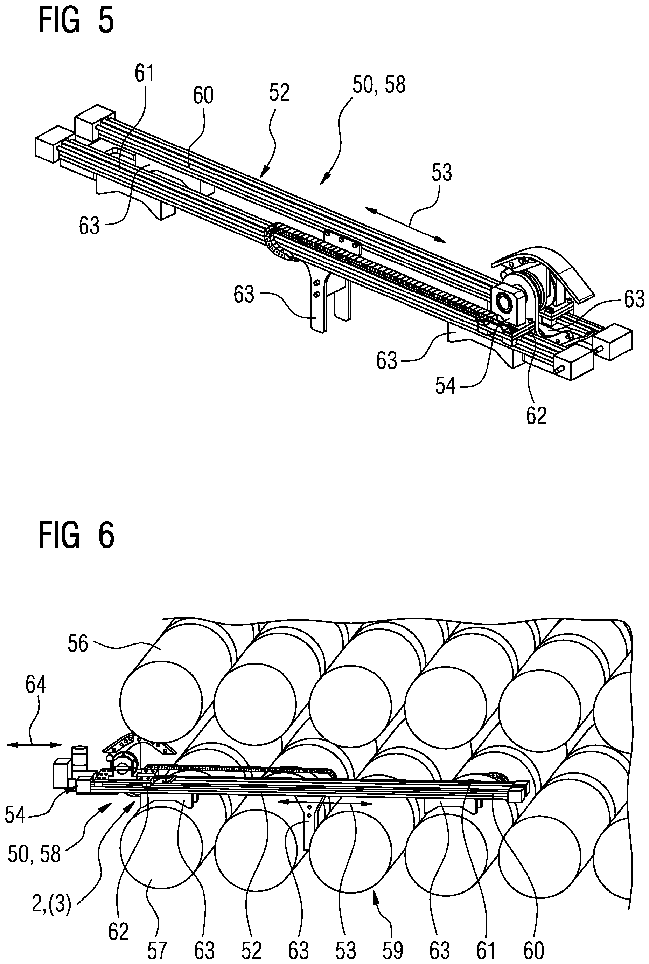

FIG 1 bis FIG 4 zeigen verschiedene Ansichten einer Messzange 1 zur Messung eines Gießspalts 2 bei einer Stranggießanlage 3 (vgl. FIG 6).

Die Messzange 1 weist zwei auf einer gemeinsamen Drehachse 4 bzw. Welle 36 montierte und - mittels eines Rillenkugellagers 18 - unabhängig voneinander (ver-)drehbare Arme 5, 6, d.h. Zangenbacken 5, 6, auf, die mittels einer starken Spiralfeder 17 auseinandergedrückt werden.

Für die Verspannung dieser Spiralfeder 17 sind Zylinderkopfschrauben 31, an denen jeweils Federenden dieser Spiralfeder 17 zum Anschlag kommen, vorgesehen.

In der gemeinsamen Drehachse 4 bzw. Welle 36 ist ein Drehwinkelaufnehmer 7, kurz im Folgenden nur Winkelsensor 7 oder nur Sensor 7 genannt, zur Erfassung der relativen Winkelstellung 8 der beiden Zangenbacken 5, 6 zueinander montiert.

Das Rillenkugellager 18 und der Drehwinkelaufnehmer 7 sind "nach außen hin" mittels eines - über Senkkopfschrauben 31 an der Welle 36 verschraubten - Lagerdeckels 37 geschützt.

Als Sensor 7 zur Erfassung der (momentanen) relativen Winkelstellung 8 zwischen den beiden Zangenbacken 5, 6 wird ein analoger Drehwinkelaufnehmer verwendet, der auf einem induktiven Messprinzip basiert.

Derartige analoge induktive Drehwinkelaufnehmer, wie der bei der Messzange 1 verwendete Sensor 7, haben gegenüber digitalen Winkelsensoren den Vorteil, dass sie bei vergleichbarer Winkelauflösung eine wesentlich kleinere Bauform besitzen, was bei der Messzange 1 aufgrund dortiger mechanischer Restriktionen von entscheidender Bedeutung ist.

So kann der bei der Messzange 1 verwendete Sensor 7 - mit seinen kompakten Abmessungen - problemlos "im Inneren" der gemeinsamen Drehachse 4 der beiden Zangenbacken 5, 6 platziert werden, was ihn (in Verbindung mit dem Lagerdeckel 37) vor äußeren Umwelteinflüssen, wie mechanische Stöße, Feuchtigkeit oder Staub schützt.

Zudem können derartige analoge induktive Drehwinkelaufnehmer, wie der bei der Messzange 1 verwendete Sensor 7, mit guter Linearität und Temperaturbeständigkeit, bei vergleichsweise geringen Herstellungskosten, aufwarten.

Die notwendige A/D-Wandlung des vom - analogen induktiven - Sensor 7 erzeugten Analogsignals kann ebenfalls mit handelsüblichen und dementsprechend kostengünstigen Industriestandard-Elektronikkomponenten erfolgen.

Das analoge bzw. digitalisierte Winkelsignal kann dann weiter in einen "linearen" Abstandswert (Spaltmaß) umgerechnet werden.

Wie weiter FIG 1 bis FIG 4 zeigt, weist jede Zangenbacke 5, 6 einen Grundträger 29 bzw. 30 auf, auf bzw. an welchem jeweils drei Segmente 9, 22, 24 bzw. 10, 23, 25, d.h. zwei äußere Segmente 22, 24 bzw. 23, 25 und ein mittiges Segment 9, 10, mittels Zylinderschrauben 31 - formschlüssig - verschraubt sind.

Das jeweils mittige Segmente 9, 10 einer jeweiligen Zangenbacke 5 bzw. 6 bildet eine Kugelschale 9, 10 aus, d.h. die jeweilige Segmentaußenfläche 11 bzw. 12 des jeweiligen mittig angeordneten Segments 9 bzw. 10 bildet einen Abschnitt einer Oberfläche 13 einer gemeinsamen Kugel 14 aus.

D. h., vereinfacht ausgedrückt, die Segmentaußenflächen 11 bzw. 12 der jeweils mittig angeordneten Segmente 9 bzw. 10 weisen eine übereinstimmende, d.h. die gleiche, dreidimensionale (Raum-)Krümmung bzw. Sphäre 13 einer (bestimmten bzw. gemeinsamen) Kugel 14 (mit einem bestimmten Kugeldurchmesser 15) auf.

Die jeweilige Segmentaußenfläche 11 bzw. 12 des jeweiligen mittig angeordneten Segments 9 bzw. 10 bzw. dessen Abmessung/Flächengröße kann durch die Kugelkoordinaten (r (Kugelradius), φ (Azimutwinkel), θ (Polarwinkel)) beschrieben und - in ihrer Abmessung/Flächengröße definiert werden, wobei der Kugelradius r 16 (bzw. so dann auch der Durchmesser 15 der gemeinsamen Kugel 14 (Durchmesser 15 ist zwei-mal Kugelradius r 16) an den Sollwert eines zu vermessenden Gießspalts 2 angepasst ist.

Bei der Messzange ist ausführungsgemäß beispielsweise [0' ≤ φ Azimutwinkel ≤ ca. 25°], [0° ≤ θ Polarwinkel ≤ ca. 70°] und Radius r 16 ca. 115 mm vorgesehen.

Die beiden Kugelschalen 9, 10 sind jeweils derart auf "ihrer" jeweiligen Zangenbacke 5 bzw. 6 (geometrisch) angeordnet, dass der Mittelpunkt 33 der gemeinsamen Kugel 14 einen bestimmten Abstand 34 ("Mittelpunktsversatz") zur gemeinsamen Drehachse 4 aufweist.

Über die Wahl bzw. über die Wahl der Größe dieses "Mittelpunktversatzes" des Kugelmittelpunkts 33 der gemeinsamen Kugel 14 zur gemeinsamen Drehachse 14 der beiden Zangenbacken 5, 6 kann der Einfluss des relativen (Ver-)Drehwinkels 8 auf den Abstand der Zangenbacken 5, 6 bzw. des Abstandes der Segementaußenflächen 11, 12 der Kugelschalen 9, 10 ("Spaltmass") eingestellt (und berechnet werden) werden.

Bei der Messzange ist ausführungsgemäß beispielsweise ein Mittelpunktsversatz von ca. 50 mm vorgesehen.

Die beiden jeweils beiderseitig der jeweiligen Kugelschale 9 bzw. 10 angeordneten Segmente 22, 24 bzw. 23, 25 ("Verlängerungssegmente" 22, 24 bzw. 23, 25) bilden jeweils eine Zylinderschale 22, 24 bzw. 23, 25 eines geraden Kreiszylinders 27, d.h. einen Abschnitt aus einem geraden Kreishohlzylinder 27, aus, dessen jeweilige Zylinderschalenaußenfläche/-oberfläche 38, 40 bzw. 39, 41 einen Abschnitt der Zylinderschalenaußenfläche/-oberfläche 26 des geraden Kreiszylinders 27 bildet.

Der Durchmesser 28 dieses geraden Kreiszylinders 27 stimmt wiederum mit dem Durchmesser 15 der gemeinsamen Kugel 14 überein.

Auch der die Abmessung/Flächengröße des jeweiligen Verlängerungssegments 22, 24 bzw. 23, 25 beschreibende/definierende "Azimutwinkel φ" der jeweilige Zylinderschalenaußenfläche/- oberfläche 38, 40 bzw. 39, 41 stimmt mit dem Azimutwinkel φ jeweilige Segmentaußenfläche 11 bzw. 12 des jeweiligen mittig angeordneten Segments 9 bzw. 10 überein.

Die Messzange 1 wird typischerweise für die Vermessung von Rollgängen/Rollensegmenten bei Stranggießanlagen 3 mit einem Gießspalt 2 zwischen 200 mm und 300 mm konzipiert, wobei die Stellung der Zangenbacken 5, 6 in einem Bereich 21 von maximal ±15 mm relativ zum Gießspalt 2 - mittels des Winkelsensors 7 - erfasst werden kann. Anders ausgedrückt bzw. konzipiert meint, es wird die Geometrie der Zangenbacken 5, 6, insbesondere auch der Durchmesser 15 der gemeinsamen Kugel 14, und der Messbereich 21 des Winkelsensors 7 an den Sollwert des jeweiligen Gießspalts 2 angepasst.

So kann beispielsweise in eine für einen 230 mm dicken Gießspalt 2 (Gießspaltsollwert) konzipierte Messzange 1 die Winkelstellung 8 der Zangenbacken 5, 6 in einem Öffnungsbereich (vgl. 21) von 220 mm - 240 mm messtechnisch erfasst werden, was bei der gewählten Geometrie der Messzange 1 bzw. der Zangenbacken 5, 6, insbesondere auch des Mittelpunktsversatzes 34 des Kugelmittelpunkts 33 der gemeinsamen Kugel 14 zur gemeinsamen Drehachse 4 der beiden Zangenbacken 5, 6 und des Kugeldurchmessers 15 der gemeinsamen Kugel 14, dann beim Winkelsensor 7 einem (maximalen messtechnischen) Messbereich 21 von ±7,5° entspricht.

Darüber hinaus - d. h., ohne, dass dies vom Winkelsensor 21 erfasst würde - können sich die Zangenbacken 5, 6 typischerweise bis zu 20 mm über den Sollwert des Gießspalts 2 hinaus öffnen sowie sich um beispielsweise bis zu 55 mm unterhalb des Sollwertes schließen, bis ein - mittels einer Zylinderkopfschraube 31 in den jeweiligen Grundträger 29 bis 30 verschraubter - mechanischer Endanschlag 19 (ein mechanischer Endanschlag 19 pro Zangenbacke 5, 6) wirksam wird.

Demnach habe hier die Zangenbacken 5, 6 also einen maximalen mechanischen (Ver-)Drehwinkelbereich 20 (mechanischen Spielraum), der einer Höhe von 185 mm bis 250 mm entspricht.

Das analoge Ausgangssignal des bei der Messzange 1 verwendeten analogen induktiven Sensors 7 kann - bei einem maximalen Winkelbereich, d. h. hier bei dem maximalen messtechnischen (Ver-)Drehwinkelbereich 21, von $\pm 7{,}5°$ (hier entsprechend der sich daraus erbenden mechanischen Bewegung der Messzange 2 von $\pm 10$ mm bei einer Ausgangshöhe (Gießspaltsollwert) von 230 mm) mit 13Bit gewandelt werden, was einer Winkelauflösung von knapp 7 Bogensekunden bzw. einer räumlichen Auflösung des zu messenden Gießspalts 2 von etwa 25 $\mu$m entspricht.

Bei Messung eines Gießspalts bei einer Stranggießanlage wird dann die Messzange 1 derart in den durch zwei zusammengehörige Stützelemente/Rollen 56 und 57 (für die Stützelemente/Rollen 56 und 57 vgl. FIG 6) gebildeten Gieß-/Rollenspalt 2 eingebracht, dass jeweils eine der zwei Kugelschalenaußenflächen 11 bzw. 12 eine der zwei zusammengehörigen Stützelemente/Rollen 56 bzw. 57 kontaktiert.

Dabei kann dann - mittels des Sensors 7 - der relative (Ver-)Drehwinkel 8 der zwei Zangenbacken 5, 6 zueinander gemessen werden. Der relative (Ver-)Drehwinkel 8 wird dann unter Verwendung einer Auswerteelektronik in ein lineares Abstandsmaß, d. h. der Höhe des Gieß-/Rollenspalts 2, umgerechnet.

Diese Auswerteelektronik kann in einer eigenen Auswertebox untergebracht werden (nicht gezeigt), welche über eine Datenleitung mit der Messzange 1 bzw. Sensor 7 verbunden ist (nicht gezeigt) - und über welche Datenleitung die Messdaten des Sensors 7 - zur Auswertung - an die Auswerteelektronik übertragbar sind.

Ein Human Maschine Interface (HMI), beispielsweise ein PC, ein Notebook, ein Tablet oder ein Smartphone, (nicht gezeigt) kann zur Steuerung des Messablaufes der Messzange 1, zur Messung selbst, zur Auswertung der Messung und zur Visualisierung verwendet werden.

Durch die Ausbildung der zwei Kugelschalenaußenflächen 11 bzw. 12 bei der Messzange 1 jeweils als Oberflächenabschnitt 13 einer gemeinsamen Kugel 14, ist es möglich, den systematischen bzw. systematischen geometrischen Messfehler, beispielsweise bei falscher, wie verkippter, Justierung (der Messzange 1 im Gießspalt 2), zu eliminieren oder weitestgehend zu eliminieren bzw. zu minimieren.

Kurz, die Messzange 1 ist - weitestgehend - "immun" gegen systematische geometrische Messfehler, wodurch die Messzange 1 nicht komplett exakt in den Gießspalt 2 eingeführt bzw. positioniert werden muss.

Hierdurch wird es durch die Messzange 1 möglich, insbesondere einen (geometrisch und/oder umgebungsbedingungsbedingt) beschränkt zugänglicher Gießspalt 2, beispielsweise im "Inneren" eines Rollengangsegments, effizient und mit hoher Genauigkeit zu vermessen.

Die Messzange 1 kann, wie beschrieben, als separates Messwerkzeug zur Messung eines Gießspalts 2 verwendet werden, wie auch eingebaut werden in (größere) Messeinheiten bzw. Messsystemen 50 zu solchen Messungen.

**Messsystem "Messschiene" 58 mit einer Längsschiene 52 und einer darauf längs (53) verfahrbaren Messzange 1 (FIG 5 bis FIG 6)**

FIG 5 und FIG 6 zeigen eine Messschiene 58 zur Messung eines Gießspalts 2 zwischen Rollen 56, 57 eines Rollengangsegments 59 bei einer Stranggießanlage 3.

Wie FIG 5 und FIG 6 zeigen, weist dieses Messsystem "Messschiene" 58 einen Längsträger 52, d. h. ein Schienensystem 52, kurz nur Längsschiene 52, aus zwei parallel zueinander angeordneten Schienen 60, 61 auf

Auf den Schienen 60, 61 der Längsschiene 52 ist ein - längs 53 der Längsschiene 52 bzw. längs 53 der Schienen 60, 61 - unter Verwendung eines (nur schematisch skizzierten (FIG 5, FIG 6)) Motors 54 - verfahrbaren - Schlitten 62 angeordnet, welcher die Messzange 1 trägt - und so die Messzange 1 längs verfahrbar der Längsschiene 52 macht.

Eine Energieversorgung bzw. die Stromversorgung des Motors 54, welcher mittels einer entsprechenden Steuerung (beispielsweise zusammen mit der Auswertelektronik untergebracht in der Auswertebox) steuerbar ist, erfolgt über eine Versorgungsleitung (oder über eine Batterie) (nicht gezeigt).

Dieses Messsystem "Messschiene" 58 bzw. deren Längsschiene 52 kann - für eine Gießspaltmessung - dann in das Rollengangsegment 59 bzw. zwischen dessen Rollen 56, 57 geschoben - und dort - mittels geeigneter, an der Längsschiene 52 bzw. an deren Schienen 60, 61 angeordneten Sicherungselemente 63 - gegen ein Verschieben in oder gegen die Rollengangsegmentlängsrichtung (Durchlaufrichtung) 64 gesichert werden.

Wird dann die Messzange 1 entlang der Längsschiene 52 bewegt, können die einzelnen Rollenspalten 2 des Rollengangsegments 59 einzeln und nacheinander vermessen werden.

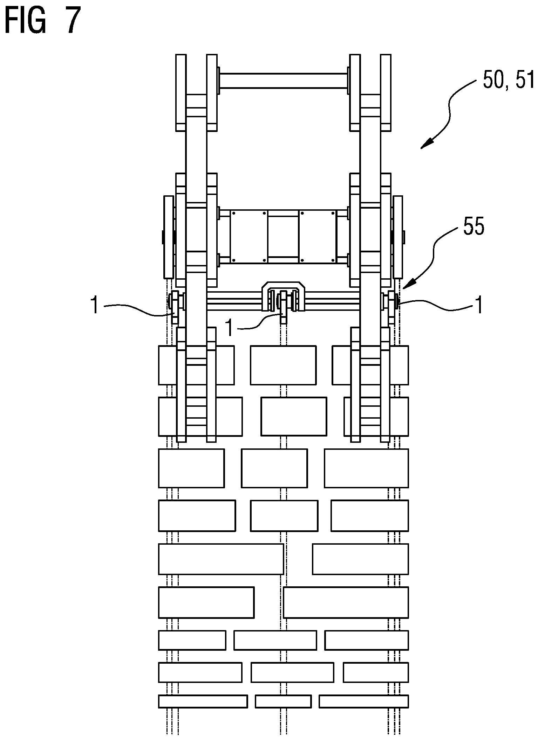

**Messsystem "Kaltwalzstrang" 51 mit mehreren dort eingebauten Messzangen 1 (FIG 7)**

FIG 7 zeigt einen - entsprechend ausgebildeten - Kaltstrang 51 zur Messung eines Gießspalts 2 bei einer Stranggießanlage 3.

Wie FIG 7 zeigt, weist dieses Messsystem Kaltwalzstrang" 51 kettenförmig verbundenen Kaltstrangglieder 55 auf, in welchem einen 55 drei Messzangen 1 - symmetrisch über dessen Breite angeordnet - eingebaut sind.

Bei einer Gießspaltmessung kann dann dieses Messsystem "Kaltstrang" 51 durch die Stranggießanlage 3 bzw. durch deren Rollengangsegmente 59 (vgl. FIG 6) gezogen werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.


Bezugszeichenliste


    1 Messvorrichtung, Messzange
    2 Rollenspalt, Gießspalt
    3 Stranggießanlage
    4 gemeinsame Drehachse
    5 (erster) Arm, Zangenbacke
    6 (zweiter) Arm, Zangenbacke
    7 (analoger, induktiver) Drehwinkelaufnehmer, (Winkel-)Sensor
    8 relativer (Ver-)Drehwinkel, (relative) Winkelstellung
    9 (erstes) (Kugel-)Segment, (erste) Kugelschale
    10 (zweites) (Kugel-)Segment, (zweite) Kugelschale

    11 (erste) Segmentaußenfläche
    12 (zweite) Segmentaußenfläche
    13 Oberfläche
    14 (gemeinsame) Kugel
    15 Durchmesser
    16 Radius r
    17 (Spiral-/Dreh-)Feder
    18 Wälzlager, (Rillen-)Kugellager
    19 (mechanischer) Anschlag
    20 (maximaler) mechanischer (Ver-)Drehwinkelbereich

    21 (maximalen) messtechnischer (Ver-)Drehwinkelbereich
    22 erstes weiteres Verlängerungssegment des ersten Armes
    23 erstes weiteres Verlängerungssegment des zweiten Armes
    24 zweites weiteres Verlängerungssegment des ersten Armes
    25 zweites weiteres Verlängerungssegment des zweiten Armes
    26 (Zylinderschalen-)Oberfläche, (Zylinderschalen-)Außenfläche
    27 gerader Kreiszylinder
    28 Durchmesser
    29 Grundträger des ersten Arms
    30 Grundträger des zweiten Arms
    31 Verschraubung, Schraube, Senkkopfschraube, Zylinderkopfschraube
    32 Längsbohrung
    33 Kugelmittelpunkt
    34 Abstand, Mittelpunktsversatz
    35 Wellensicherungsring
    36 Welle
    37 Lagerdeckel
    38 Verlängerungssegmentaußenfläche
    39 Verlängerungssegmentaußenfläche
    40 Verlängerungssegmentaußenfläche

41 Verlängerungssegmentaußenfläche
50 Messeinheit, Messsystem

51 Kaltstrang
52 Längsschiene, Längsträger, Schienensystem
53 Längsrichtung
54 Motor
55 Kaltstrangglied
56 Stützelement, Rolle
57 Stützelement, Rolle
58 Messschiene
59 Rollengangsegment
60 (erste) Schiene
61 (zweite) Schiene
62 Schlitten
63 Sicherungselement
64 Rollengangsegmentlängsrichtung, Durchlaufrichtung
65 Neigungssensor

$(r, \varphi, \theta)$ Kugelkoordinaten

**Patentansprüche**

1. Messvorrichtung (1) zur Messung eines Gießspalts (2) bei einer Stranggießanlage (3) mit zwei um eine gemeinsame Drehachse (4) drehbaren Arme (5, 6) sowie einem Drehwinkelaufnehmer (7) zur Messung eines relativen (Ver-)Drehwinkels (8) der zwei Arme (5, 6) zueinander
   **dadurch gekennzeichnet, dass**
   jeder der zwei Arme (5, 6) zumindest ein Segment (9, 10) aufweist, dessen jeweilige Segmentaußenfläche (11, 12) ein Abschnitt einer Oberfläche (13) einer gemeinsamen Kugel (14) ist.

2. Messvorrichtung (1) nach mindestens einem der voranstehenden Ansprüche
   **dadurch gekennzeichnet, dass**
   der Durchmesser (15) der gemeinsamen Kugel (14) aus einem Bereich von 150 mm bis 350 mm, insbesondere aus einem Bereich von 200 mm bis 300 mm, besondere bevorzugt aus einem Bereich von 220 mm bis 250 mm, gewählt ist.

3. Messvorrichtung (1) nach mindestens einem der voranstehenden Ansprüche
   **dadurch gekennzeichnet, dass**
   die jeweilige Segmentaußenfläche (11, 12) durch folgende Kugelkoordinaten ($r$ (Kugelradius), $\varphi$ (Azimutwinkel), $\theta$ (Polarwinkel)), mit $[0° \leq \varphi \leq$ ca. 35°] oder $[0° \leq \varphi \leq$ ca. 30°] oder $[0° \leq \varphi \leq$ ca. 25°] oder $[0° \leq \varphi \leq$ ca. 20°], mit $[0° \leq \theta \leq$ ca. 90°] oder $[0° \leq \theta \leq$ ca. 80°] oder $[0° \leq \theta \leq$ ca. 70°] oder $[0° \leq \theta \leq$ ca. 60°] beschreibbar ist.

4. Messvorrichtung (1) nach mindestens einem der voranstehenden Ansprüche
   **dadurch gekennzeichnet, dass**
   die zwei um eine gemeinsame Drehachse (4) drehbaren Arme (5, 6) unter Verwendung einer Spiralfeder (17) gegeneinander verspannt und/oder unter Verwendung eines Wälzlagers (18), insbesondere eines Kugellagers (18), gegeneinander drehbar gelagert sind.

5. Messvorrichtung (1) nach mindestens einem der voranstehenden Ansprüche
   **dadurch gekennzeichnet, dass**
   die zwei um eine gemeinsame Drehachse (4) drehbaren Arme (5, 6) einen, insbesondere unter Verwendung mindestens eines Anschlags (19) begrenzbaren, maximalen mechanischen (Ver-)Drehwinkelbereich (20) von ca. +/- 12,5° oder von ca. +/-10° oder von ca. +/- 7,5° oder von ca. +/- 5° aufweisen und/oder die zwei um eine gemeinsame Drehachse (4) drehbaren Arme (5, 6) einen, insbesondere unter Verwendung des Drehwinkelaufnehmers (7) messbaren, maximalen messtechnischen (Ver-)Drehwinkelbereich (21) von ca. +/- 12,5° oder von ca. +/-10° oder von ca. +/- 7,5° oder von ca. +/- 5° oder von ca. +/- 5° aufweisen und/oder der maximale mechanische (Ver-)Drehwinkelbereich (20) größer ist als der maximale messtechnische (Ver-)Drehwinkelbereich (21).

6. Messvorrichtung (1) nach mindestens einem der voranstehenden Ansprüche
**dadurch gekennzeichnet, dass**
der Drehwinkelaufnehmer (7) ein analoger Drehwinkelaufnehmer (7), insbesondere ein induktiver analoger Drehwinkelaufnehmer (7), ist.

7. Messvorrichtung (1) nach mindestens einem der voranstehenden Ansprüche
**dadurch gekennzeichnet, dass**
jeder der zwei Arme (5, 6) zumindest ein erstes weiteres Verlängerungssegment (22, 23), insbesondere ein erstes weiteres (22, 23) und ein zweites weiteres Verlängerungssegment (24, 25), aufweist, welches erste (22, 23) und/oder zweite Verlängerungssegment (24, 25) mit dem jeweiligen Segment (9, 10), insbesondere einstückig, verbunden ist.

8. Messvorrichtung (1) nach mindestens dem voranstehenden Anspruch
**dadurch gekennzeichnet, dass**
das erste (22, 23) und/oder das zweite Verlängerungssegment (24, 25) eine jeweilige Verlängerungssegmentaußenfläche (38, 39, 40, 41) aufweist, die ein Abschnitt einer Oberfläche (26) eines geraden Kreiszylinders (27) ist, insbesondere eines geraden Kreiszylinders (27), welcher den Durchmesser (28 (, 15)) der gemeinsamen Kugel (14) besitzt.

9. Messvorrichtung (1) nach mindestens einem der voranstehenden Ansprüche
**dadurch gekennzeichnet, dass**
jeder Arm (5, 6) einen Grundträger (29, 30) aufweist, an welchem das jeweilige Segment (9, 10) und/oder das erste weitere Verlängerungssegment (22, 23) und/oder das zweite weitere Verlängerungssegment (24, 25) lösbar, insbesondere unter Verwendung einer Verschraubung (31), angeordnet ist/sind.

10. Messvorrichtung (1) nach mindestens einem der voranstehenden Ansprüche
**dadurch gekennzeichnet, dass**
der Drehwinkelaufnehmer (7) im Bereich der gemeinsamen Drehachse (4) der zwei um die gemeinsame Drehachse (4) drehbaren Arme (5, 6), insbesondere zumindest teilweise in einer Längsbohrungen (32) in einer Welle (36), durch welche die gemeinsame Drehachse (4) verläuft, angeordnet ist.

11. Messvorrichtung (1) nach mindestens einem der voranstehenden Ansprüche
**dadurch gekennzeichnet, dass**
die zwei um die gemeinsame Drehachse (4) drehbaren Arme (5, 6) derart ausgebildet sind, dass, wenn die zwei um die gemeinsame Drehachse (4) drehbaren Arme (5, 6) derart zueinander verdreht sind, dass die zwei Segmentaußenflächen (11, 12) auf der Oberfläche (13) der gemeinsamen Kugel (14) zu liegen kommen, dann ein Mittelpunkt (33) der gemeinsamen Kugel (14) beabstandet (34), insbesondere in einem Abstand (34) von ca. 60mm oder von ca. 55 mm oder von ca. 50 mm oder von ca. 45 mm, von der gemeinsamen Drehachse (4) liegt.

12. Messvorrichtung (1) nach mindestens einem der voranstehenden Ansprüche
**dadurch gekennzeichnet, dass**
zumindest die Segmente (9, 10) aus Stahl sind.

13. Messvorrichtung (1) nach mindestens einem der voranstehenden Ansprüche
**gekennzeichnet durch**
einen Neigungssensor (65).

14. Messeinheit (50) zur Messung eines Gießspalts (2) bei einer Stranggießanlage (3)
mit zumindest der Messvorrichtung (1) nach mindestens einem der vorangegangenen Vorrichtungsansprüche und einer Längsschiene (52), auf welcher die Messvorrichtung (1) in einer Längsrichtung (53) der Längsschiene (52) verfahrbar, insbesondere motorisiert (54) oder händisch verfahrbar, angeordnet ist.

15. Kaltstrang (51) mit zumindest einer der Messvorrichtung (1) nach mindestens einem der vorangegangenen Vorrichtungsansprüche, wobei die zumindest eine Messvorrichtung (1) in den Kaltstrang (51), insbesondere in ein Kaltstrangglied (55), eingebaut oder an diesen (51) angehängt ist.

16. Verwendung der Messvorrichtung (1) nach mindestens einem der vorangegangenen Messvorrichtungsansprüche zur Messung eines Gießspalts (2) bei einer Stranggießanlage (3),
wobei die Messvorrichtung (1) derart in einem durch zwei zusammengehörige Stützelemente/Rollen (56, 57) gebildeten Gießspalt (2) eingebracht wird, dass jeweils eine (11, 12) der zwei Segmentaußenflächen (11, 12) eine (56, 57) der zwei zusammengehörigen Stützelemente/Rollen (56, 57) kontaktiert, und dabei der relative (Ver-)Drehwinkel (8) der zwei Arme (5, 6) zueinander unter Verwendung des Drehwinkelaufnehmers (7) gemessen wird.

FIG 1

9, 11, 13, (14)

5

1

22, 26, 38

37

4, (7), (18), (32), (36)

19

30

40, 26, 24

23, 26, 39

17

6

29

10, 12, 13, (14)

25, 26, 41

FIG 2

24, 26, 40

29

1

4, (7), (18), (32), (36)

25, 26, 41

37

9, 11, 13, (14)

5

6

22, 26, 38

19

10, 12, 13, (14)

23, 26, 39

30

**FIG 3**

**FIG 4**

## FIG 5

## FIG 6

## FIG 7

# FIG 8

Europäisches
Patentamt

European
Patent Office

Office européen
des brevets

# EUROPÄISCHER RECHERCHENBERICHT

**Nummer der Anmeldung**

EP 17 18 4150

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S54 151515 A (NIPPON STEEL CORP) 28. November 1979 (1979-11-28) * Zusammenfassung * * Abbildungen 1, 6 * ----- | 1-16 | INV. B22D11/16 B22D11/20 B21B38/10 G01B5/14 |
| X | JP S57 1554 A (NIPPON STEEL CORP; TAIHEI KOGYO KK; ANRITSU ELECTRIC CO LTD) 6. Januar 1982 (1982-01-06) * Zusammenfassung * * Abbildung 2b * ----- | 1-16 | |
| A | US 4 294 305 A (ODA KENICHI) 13. Oktober 1981 (1981-10-13) * Abbildungen 5,8,10 * * Spalte 3, Zeile 32 - Zeile 49 * ----- | 1-16 | |

**RECHERCHIERTE SACHGEBIETE (IPC)**

B22D
C01B
B21B
G01B

Der vorliegende Recherchenbericht wurde für alle Patentansprüche erstellt

| Recherchenort | Abschlußdatum der Recherche | Prüfer |
|---|---|---|
| Den Haag | 17. Januar 2018 | Peis, Stefano |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 4150

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2018

| Im Recherchenbericht angeführtes Patentdokument | Datum der Veröffentlichung | Mitglied(er) der Patentfamilie | Datum der Veröffentlichung |
|---|---|---|---|
| JP S54151515 A | 28-11-1979 | JP S5931421 B2<br>JP S54151515 A | 02-08-1984<br>28-11-1979 |
| JP S571554 A | 06-01-1982 | KEINE | |
| US 4294305 A | 13-10-1981 | KEINE | |

Für nähere Einzelheiten zu diesem Anhang : siehe Amtsblatt des Europäischen Patentamts, Nr.12/82

EPO FORM P0461